# EUROPEAN PATENT SPECIFICATION

(11) **EP 1 980 160 B1**
(45) Date of publication and mention of the grant of the patent: **01.08.2012**
(21) Application number: 08006270.6
(22) Date of filing: 31.03.2008
(51) Int. Cl.: A23L 1/16

(54) **Method for making lasagne and other ready to eat food products**
Verfahren zur Zubereitung von Lasagne und anderen Fertiggerichten
Procédé de fabrication de lasagnes et autres produits alimentaires prêts à consommer

(30) Priority: 02.04.2007 IT MI20070673
(43) Date of publication of application: 15.10.2008
(73) Proprietor: Pastificio Rana S.p.A., 37057 San Giovanni Lupatoto (Verona) (IT)
(72) Inventor: Rana, Giovanni, 37057 S.Giovanni Lupatoto (Verona) (IT)
(74) Representative: Lissandrini, Marco

(56) References cited:
- EP-A- 0 876 767
- EP-A- 0 882 406
- EP-A- 1 230 861
- DE-A1- 4 021 481
- US-A- 3 281 248
- US-A- 5 693 351

## Description

### BACKGROUND OF THE INVENTION

The present invention relates to a method for making lasagne and other ready to eat food products.

As is known, lasagne are a typical food product of the Italian cuisine, and comprise a plurality of pasta or dough layers, therebetween further meat and/or vegetable and bechamel layers are arranged.

The method for making lasagne is very complex, since it requires a sequence of operating steps, from preparing the fresh pasta to layering lasagne with an interposition of sauce, pasta and bechamel layers.

At an industrial level, the pasta layers are conventionally pre-cooked, before mixing them with meat or vegetable sauces and bechamel.

This is made in order to decrease the cooking time necessary for cooking lasagne in a home kitchen, heating the food product and ending its cooking stage.

EP 0 882 406 A1 discloses frozen multilayered pasta products overlapped for home preparation of lasagne.

US 5 693 351 discloses pasta envelopes filled with hashed meat, not uniformly sealed around the periphery, having one ore more places where the edges are not sealed together.

### SUMMARY OF THE INVENTION

Accordingly, the aim of the present invention is to provide such a lasagne making method which, in addition to preventing pasta from being precooked, allows to prepare an end product including particularly selected meat and vegetable components, used as integral pieces.

Within the scope of the above mentioned aim, a main object of the invention is to provide such a lasagne making method in which the lasagne components incur in a thermal damage much smaller than that of conventional industrial lasagne making methods and systems.

According to one aspect of the present invention, the above mentioned aim and objects, as well as yet other objects, which will become more apparent hereinafter, are achieved by a method for making lasagne and other ready to eat food products, as set out in the following claims.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative example, in the accompanying drawings, where:

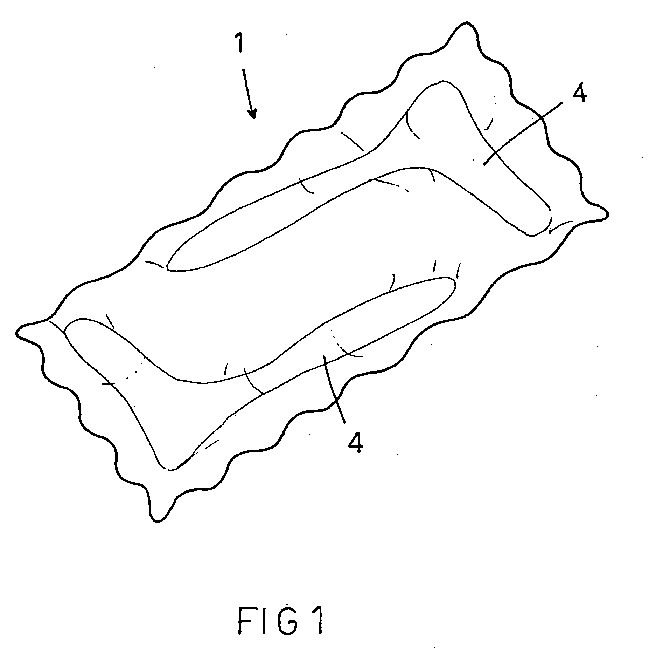

Figure 1 is a schematic perspective view showing a fresh pasta half-finished food product, according to the present invention;

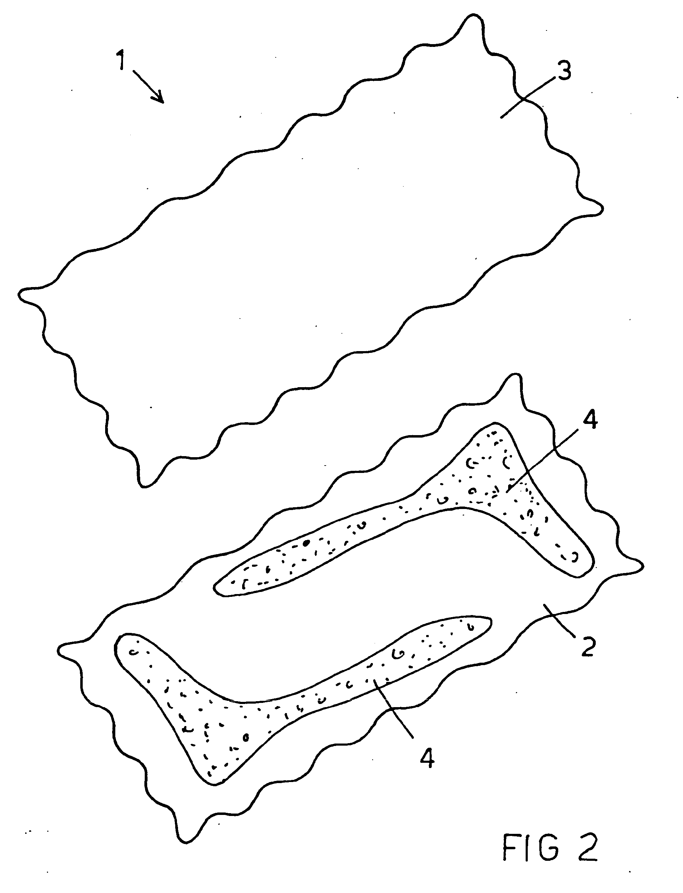

Figure 2 is a further exploded perspective view of the fresh pasta semi-finished food product according to the present invention;
Figure 3 schematically shows three pasteurizing systems according to the present invention; and

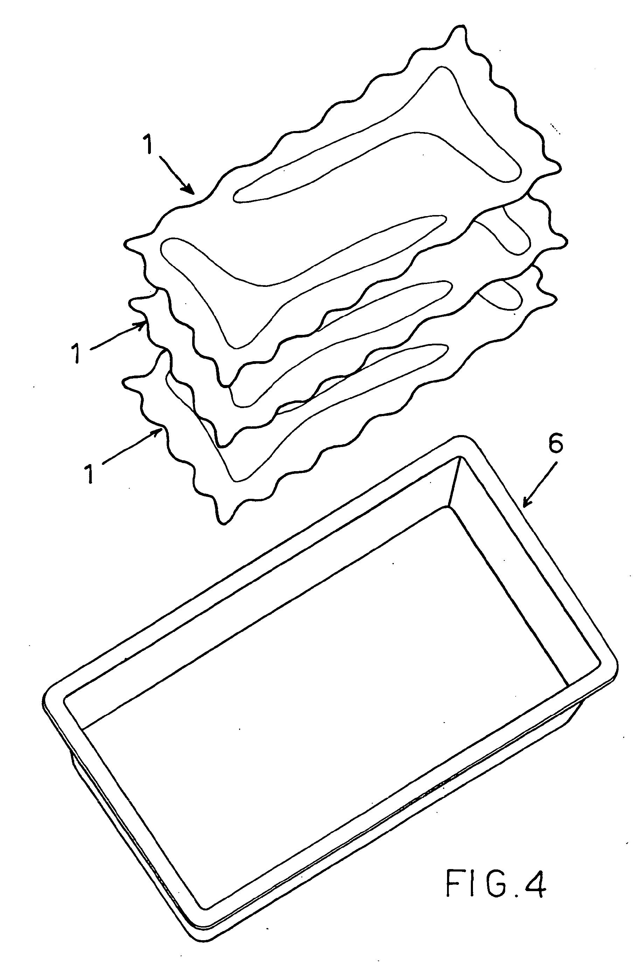

Figure 4 is a further perspective schematic view showing an example for using the food product according to the present invention.

### DESCRIPTION OF THE PREFERRED EMBODIMENT

With reference to the number references of the above mentioned figures, the lasagne making method according to the present invention comprises a step of preparing a fresh pasta half-finished lasagna food product, generally indicated by the reference number 1, which comprises two very thin pasta or dough layers, indicated by the reference numbers 2 and 3, which are sealed on the four sides thereof and include therebetween a meat or vegetable sauce, or any other desired filler sauce 4.

Each said layer has a thickness less than 1.2 mm.

The filler sauce 4 included between the two pasta layers 2 and 3 and sealed on the four sides thereof, is very soft, and advantageously comprises integral meat or vegetable product pieces.

In particular, the inventive method provides to use pasta layers in any desired number from one to five overlapped in a cooking vessel 6, where the pasta layers are alternately arranged with béchamel or other sauce layers.

The method according to the present invention can be applied for preparing lasagne, but also other food products, such as stuffed cannelloni and other ready to eat foods.

More specifically, the method according to the present invention is characterized in that it provides to use:
- pasta or dough layers having specifically designed elastic properties, which are obtained by laminating the pasta layers to a small thickness, to prevent them from being precooked;
- fillings or stuffings arranged between the two or more pasta layers, sealed at their four sides, both having a very high softness and containing integral meat or vegetable pieces or any other desired food components;
- specifically designed pasteurizing methods, to preserve the food product freshness, while preventing pasta from pre-cooking.

From a process standpoint, the invention is provided to use a combination of novel specifically designed making systems/methods such as:
a. metering, between at least two pasta layers, a very soft, nearly liquid, filling or stuffing material to be spread substantially on the overall bottom and top surface of the pasta layers;
b. sealing bottom and top the above nearly liquid filling or stuffing into two very thin pasta layers;
c. pasteurizing, by a specifically designed pasteurizing cycle, the two pasta layers, which could also contain a comparatively large amount of a meat sauce, so as to subject the product to a thermal damage as small as possible; and
d. overlapping several pairs of pasta layers (in general three pairs of pasta layers), alternately arranged with the filling or stuffing materials, while simultaneously hot metering therebetween bechamel and other sauces in general.

With respect to the above mentioned pasteurizing method, in order to assure a proper freshness of the starting materials, three pasteurizing systems, subjecting lasagne to different thermal damages and involving different plant, will be used.

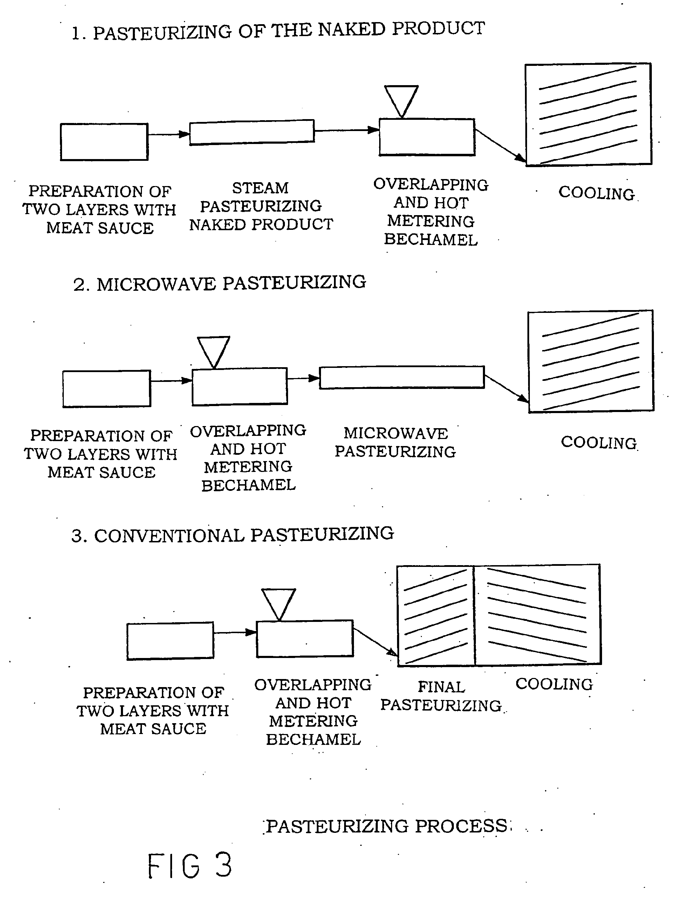

Figure 3 schematically shows the above three pasteurizing systems used to perform the pasteurizing method according to the present invention, and comprising a pasteurizing of the naked product, a microwave pasteurizing and a conventional pasteurizing.

In the naked product pasteurizing, as in any thermal processing methods, the heat transmission will be quicker for small thickness products, such as for only two pasta layers and a single meat sauce layer therebetween, and slower for lasagne including a plurality of layers.

Thus, the above process consists of performing the pasteurizing on half-finished lasagne pieces, hot overlapping the pieces, simultaneously hot metering bechamel or other sauces in general, and cooling and packaging lasagne in a white chamber.

The microwave pasteurizing system, in particular, consists of a system for quickly heating lasagne, even of a comparatively large thickness, and then cooling down them by a conventional cooling system blowing on the heated lasagne microbiologically filtered cold air, and finally aseptically packaging the cooled lasagne.

The third conventional pasteurizing method is performed by using hot air, followed by a cooling cycle on conveyor belts are arranged with a spiral arrangement in heating and cooling columns or towers.

### Example

Lasagne comprising three pairs of pasta layers, holding therebetween a meat sauce, for a total weight of 300 grams are herein prepared.

The layers have a size of about 16 x 10 centimeters.

The six pasta layers have each a thickness of about 0.5 mm.

Between each pair of pasta layers four bechamel and other sauce layers, are alternately arranged between the three pairs of stuffed pasta layers, for a total weight of 600 grams, are distributed.

In the thus made half-finished lasagne according to the present invention, each pairs has two pasta layers, each having a thickness less than 1.2 millimeters, and enclosing therebetween meat or other vegetable sauces, alternately arranged with bechamel and other sauce layers, to be either individually sold or packaged in multiple packages, for preparing at home lasagne and the like, without requiring the pasta layers to be prepared.

Lasagne or other ready to eat foods made by the inventive method have a very high meat sauce rate, which can also exceed 70% based on the half-finished lasagne weight or 35% based on the total weight of finished lasagne, and preserve their starting meat or vegetable texture, with very good characteristics similar to those of corresponding fresh lasagne.

As stated, the method according to the present invention is characterized by a pasteurizing treatment tending to reduce to a minimum a possible thermal damage, while assuring a very great hygiene of the made product and accordingly a long preservation thereof.

Moreover, the thus made lasagne or other ready to eat products provide, upon cutting through, a very clean splitting of the pasta layers.

In particular, lasagne or other ready to eat products made by the inventive method, can be advantageously sold under a protective atmosphere, either fully or partially constituted by carbon dioxide.

It has been found that the invention fully achieves the intended aim and objects.

In practicing the invention, the used materials, as well as the contingent size and shapes, can be any, according to requirements.

## Claims

1. A method for making, in a ready for cooking condition, non pre-cooked fresh-pasta lasagne, said method comprising the steps of providing a first and second thin pasta layers each having a thickness less than 12 millimetrers, metering on su stantially the overall top surface of said first pasta layer a very soft, nearly liquid material and integral meat piece mixture, overlapping on said first pasta layer said second pasta layer, sealing on the four sides thereof said stuffing mixture containing first and second overlapped pasta layer, to provide a two pasta layer stuffed sealed unit, pasteurizing said unit, and overlapping a number of said units while simultaneously hot metering between each pair of overlapping said units bechamel and/or other sauces.

2. A method according to claim 1, **characterized in that** said stuffing mixture is included in a rate larger than 35% based on the final lasagne weight.

3. A method according to claim 1, **characterized in that** said method further comprises the step of preserving said lasagne under a protective atmosphere either fully or partially constituted by carbon dioxide.

4. A method according to claim 1, **characterized in that** said pasteurizing is performed by hot overlapping said lasagne units, while hot metering bechamel and/or other sauces therebetween and then cooling and packaging in a white chamber the thus made product.

5. A method according to claim 1, **characterized in that** said pasteurizing step is a microwave pasteurizing step comprising quickly heating said lasagne, cooling said quickly heated lasagne by a microbiologically filtered cooling air system and aseptically packaging said cooled lasagne.

6. A method according to claim 1, **characterized in that** said pasteurizing step comprises a hot air pasteurizing treatment, followed by a cooling treatment on conveyor belts arranged with a spiral arrangement in heating and cooling towers.

## Patentansprüche

1. Verfahren zur Zubereitung von garfertiger Lasagne aus frischer, nicht vorgegarter Pasta, wobei dieses Verfahren folgende Phasen umfasst: Bereitstellung einer ersten und einer zweiten dünnen Pastaschicht, die jeweils eine Dicke von weniger als 1,2 Millimeter aufweisen, Dosieren eines sehr weichen, fast flüssigen Materials und einer Mischung aus einem vollständigen Stück Fleisch auf im Wesentlichen die gesamte Oberfläche der ersten Pastaschicht, Auflegen der zweiten Pastaschicht auf die erste Pastaschicht, Abdichten der genannten Füllungsmischung, die die erste und zweite aufeinandergelegte Pastaschicht enthält, an deren vier Seiten, um eine abgedichtete, gefüllte Einheit aus zwei Pastaschichten zu erhalten, Pasteurisieren dieser Einheit und Aufeinanderlegen einer Anzahl dieser Einheiten während des gleichzeitigen Heißdosierens von Béchamel- und/oder anderen Saucen zwischen jedem aufeinandergelegten Paar der Einheiten.

2. Verfahren nach Anspruch 1, **dadurch gekennzeichnet, dass** diese Füllungsmischung in einem höheren Anteil als 35 %, basierend auf dem abschließenden Lasagnegewicht, eingeschlossen ist.

3. Verfahren nach Anspruch 1, **dadurch gekennzeichnet, dass** dieses Verfahren zudem die Phase des Konservierens der Lasagne unter einer Schutzatmosphäre umfasst, die entweder vollständig oder teilweise aus Kohlendioxid besteht.

4. Verfahren nach Anspruch 1, **dadurch gekennzeichnet, dass** das Pasteurisieren ausgeführt wird, indem die Lasagneeinheiten heiß übereinandergelegt werden, während heiß Béchamelsauce und/oder sonstige Saucen dazwischen dosiert werden, und das so hergestellte Produkt anschließend in einem Reinraum abgekühlt und verpackt wird.

5. Verfahren nach Anspruch 1, **dadurch gekennzeichnet, dass** es sich bei der Phase des Pasteurisierens um eine Phase des Mikrowellenpasteurisierens handelt, umfassend das schnelle Erhitzen der Lasagne, das Abkühlen der schnell erhitzten Lasagne mittels eines mikrobiologisch gefilterten Luftkühlungssystems und das aseptische Verpacken der abgekühlten Lasagne.

6. Verfahren nach Anspruch 1, **dadurch gekennzeichnet, dass** die Phase des Pasteurisierens eine Hitzepasteurisierungsbehandlung umfasst, gefolgt von einer Abkühlungsbehandlung auf Transportbändern, angeordnet in einer spiralförmigen Anordnung in Heiz- und Kühltürmen.

## Revendications

1. Procédé de fabrication, dans un état prêt à cuire, de lasagnes fraîches non précuites, ledit procédé comprenant les étapes de fournir une première et une deuxième fine couche de pâte ayant une épaisseur inférieure à 1,2 millimètres, dosant sur essentiellement l'ensemble de la surface supérieure de ladite première couche de pâte une matière très molle, presque liquide et un mélange de pièces de viandes intégrales, superposant ladite deuxième couche de pâte sur la première couche de pâte et scellant sur les quatre côtés de celles-ci ledit mélange à farcir contenant la première et la deuxième couche de pâte superposées, pour fournir une unité scellée farcie à deux couches de pâte, pasteurisant ladite unité, et superposant un nombre desdites unités en dosant simultanément à chaud entre chaque paire desdites unités en intercalant de la béchamel et/ou d'autres sauces.

2. Procédé selon la revendication 1, **caractérisé en ce que** ledit mélange à farcir est compris dans un taux supérieur à 35% basé sur le poids final des lasagnes.

3. Procédé selon la revendication 1, **caractérisé en ce que** ledit procédé comprend également l'étape de conserver lesdites lasagnes sous atmosphère contrôlée entièrement ou partiellement constituée par du dioxyde de carbone.

4. Procédé selon la revendication 1, **caractérisé en ce que** ladite pasteurisation est réalisée par l'intermédiaire de la superposition à chaud desdites unités de lasagnes, en dosant à chaud de la béchamel et/ou d'autres sauces entre elles puis en refroidissant et en conditionnant le produit ainsi réalisé dans une salle blanche.

5. Procédé selon la revendication 1, **caractérisé en ce que** ladite étape de pasteurisation est une étape de pasteurisation par micro-ondes comprenant le réchauffage rapide desdites lasagnes, le refroidissement desdites lasagnes rapidement réchauffées par un système d'air de refroidissement filtré microbiologiquement et l'emballage aseptique desdites lasagnes refroidies.

6. Procédé selon la revendication 1, **caractérisé en ce que** ladite étape de pasteurisation comprend un traitement de pasteurisation à l'air chaud suivi d'un traitement de refroidissement sur des tapis transporteurs organisés suivant un agencement en spirale dans des tours de réchauffage et de refroidissement.
